# EUROPEAN PATENT APPLICATION

(11) **EP 2 693 619 A2**
(43) Date of publication of application: **05.02.2014**
(21) Application number: 13275175.1
(22) Date of filing: 31.07.2013
(51) Int. Cl.: H02M 1/42, H02M 3/156, H02M 3/158, H05B 41/282

(54) **Single stage forward-flyback converter and power supply apparatus**

(30) Priority: 03.08.2012 KR 20120085172; 29.07.2013 KR 20130089678
(71) Applicant: Samsung Electro-Mechanics Co., Ltd, Suwon, Gyunggi-Do (KR)
(72) Inventor: Han, Sang Kyoo, Seoul (KR); Hwang, Min Ha, Seoul (KR); Choi, Yoon, Seoul (KR); Park, Hong Sun, Gyunggi-do (KR); Ryu, Byoung Woo, Gyunggi-do (KR); Kim, Sung Cheol, Gyunggi-do (KR); Oh, Dong Seong, Gyunggi-do (KR)
(74) Representative: Potter Clarkson LLP

(57) **Abstract**

There is provided a single-stage forward-flyback converter capable of increasing power factor and power conversion efficiency while performing power factor correction and constant current control in a single-stage circuit. The converter includes: a power converting unit including a transformer having a primary winding receiving input power and a secondary winding magnetically coupled to the primary winding to receive power induced thereto, and converting the input power in a forward scheme and a flyback scheme; a balancing unit maintaining balance between a power level by the forward scheme of the power converting unit and a power level by the flyback scheme thereof; and a path providing unit clamping the power by the forward scheme of the power converting unit and the power by the flyback scheme thereof to provide a power transfer path, wherein the power converting unit selectively operates the forward scheme according to a voltage level of input power.

## Description

### CROSS-REFERENCE TO RELATED APPLICATION

This application claims the priorities of Korean Patent Application Nos. 10-2012-0085172 filed on August 3, 2012, and 10-2013-0089678 filed on July 29, 2013, in the Korean Intellectual Property Office, the disclosures of which are incorporated herein by reference.

### BACKGROUND OF THE INVENTION

### Field of the Invention

The present invention relates to a single stage forward-flyback converter and a power supply apparatus.

### Description of the Related Art

Generally, in order to drive an electronic device domestically, commercially or industrially, a power supply apparatus converting commercial power into driving power appropriate for the electronic device and supplying the converted driving power is used inside or outside the electronic device.

The power supply apparatus may also be used in order to drive a light emitting diode (LED).

Recently, interest in and demand for light emitting diodes have increased.

A device using a light emitting diode may be manufactured to have a compact form, such that it may even be used in a place in which it is difficult to install an existing electronic product. Further, in the case in which the light emitting diode is used as a lighting device, various colors and degrees of luminance may easily be implemented therein, such that it may be used in a lighting system appropriate for an activity such as watching movies, reading books, conferencing, and the like.

In addition, the light emitting diode consumes approximately 1/8 of power consumed by an incandescent lamp, has a lifespan of fifty thousand to one hundred thousand hours, which is 5 to 10 times that of an incandescent lamp, is environmentally -friendly as a mercury free light source, and may be variously designed.

Due to these characteristics, light emitting diode light projects have been promoted as nationally-funded projects in many countries such as Korea, the United State, Japan, Australia, and others.

As described above, the light emitting diode of which the use has increased requires a driving apparatus for the driving thereof. As described in the following Related Art Document, in the case of a two-stage circuit configuration of a power factor correction circuit performing power factor correction and a direct current (DC) to DC converter circuit for a constant current control of an output load, power conversion efficiency is deteriorated, and in the case of driving a plurality of light emitting diode arrays, when a required light emitting diode driving voltage rises, manufacturing costs may be increased due to the use of a high voltage element.

### [Related Art Document]

(Patent Document 1) Korean Patent Laid-Open Publication No. 2012-0031215

### SUMMARY OF THE INVENTION

An aspect of the present invention provides a single stage forward-flyback converter, and a power supply apparatus capable of improving power factor correction and power conversion efficiency even while performing a power factor correction function and a constant current control function in a single stage circuit.

According to an aspect of the present invention, there is provided a single stage forward-flyback converter including: a power converting unit including a transformer having a primary winding receiving input power and a secondary winding magnetically coupled to the primary winding to receive power induced thereto and converting the input power in a forward scheme and a flyback scheme; a balancing unit maintaining a balance between a power level by the forward scheme of the power converting unit and a power level by the flyback scheme thereof; and a path providing unit clamping the power by the forward scheme of the power converting unit and the power by the flyback scheme thereof to provide a power transfer path, wherein the power converting unit selectively operates the forward scheme according to a voltage level of the input power.

The power converting unit may operate the forward scheme when the sum of the voltage level of the input power and a voltage level of power charged in the balancing unit is higher than a voltage level of output power.

The power converting unit may normally operate the flyback scheme, regardless of the voltage level of the input power.

The power converting unit may further include a power switch switching the power input to the primary winding of the transformer.

The power switch may constantly maintain a turn-on duty to improve a power factor of the input power.

The input power may be rectified and then transferred to the primary winding.

The balancing unit may be configured as a capacitor provided between the secondary winding and an output inductor and having power charged therein or discharged therefrom.

The path providing unit may include: a first diode connected between a ground, one end of the balancing unit and one end of an output inductor to provide a power transfer path; a second diode connected between the ground and one end of the secondary winding to provide a power transfer path and clamp the power; and a third diode connected between one end of the secondary winding, the other end of the output inductor and an output capacitor to provide a power transfer path and clamp the power.

An output of the power converting unit may be supplied to at least one light emitting diode.

According to another aspect of the present invention, there is provided a power supply apparatus including: a rectifying unit rectifying alternating current (AC) power; a power converting unit including a transformer having a primary winding receiving the rectified power from the rectifying unit and a secondary winding magnetically coupled to the primary winding to receive power induced thereto, and converting the rectified power in a forward scheme and a flyback scheme; a balancing unit maintaining a balance between a power level by the forward scheme of the power converting unit and a power level by the flyback scheme thereof; and a path providing unit clamping the power by the forward scheme of the power converting unit and the power by the flyback scheme thereof to provide a power transfer path, wherein the power converting unit selectively operates the forward scheme according to a voltage level of the rectified power.

The power supply apparatus may further include an electromagnetic interference (EMI) filter removing EMI from the AC power.

### BRIEF DESCRIPTION OF THE DRAWINGS

The above and other aspects, features and other advantages of the present invention will be more clearly understood from the following detailed description taken in conjunction with the accompanying drawings, in which:
FIG. 1 is a schematic circuit diagram of a power supply apparatus according to an embodiment of the present invention;
FIG. 2 is a graph showing power conversion operation criteria, of the power supply apparatus, according to the embodiment of the present invention;
FIGS. 3 and 4 are circuit diagrams showing current flows according to operating modes of the power supply apparatus according to the embodiment of the present invention; and
FIGS. 5 and 6 are graphs showing electrical characteristics according to the operating modes of the power supply apparatus according to the embodiment of the present invention.

### DETAILED DESCRIPTION OF THE EMBODIMENTS

Hereinafter, embodiments of the present invention will be described in detail with reference to the accompanying drawings so that they can be easily practiced by those skilled in the art to which the present invention pertains.

The invention may, however, be embodied in many different forms and should not be construed as being limited to the embodiments set forth herein. Rather, these embodiments are provided so that this disclosure will be thorough and complete, and will fully convey the scope of the invention to those skilled in the art. Moreover, detailed descriptions related to well-known functions or configurations will be ruled out in order not to unnecessarily obscure subject matters of the invention.

In addition, like or similar reference numerals denote parts performing similar functions throughout the drawings.

It will be understood that when an element is referred to as being "connected to" another element, it can be directly connected to the other element or may be indirectly connected to the other element with element (s) interposed therebetween.

Unless explicitly described to the contrary, the word "comprise" and variations such as "comprises" or "comprising," will be understood to imply the inclusion of stated elements but not the exclusion of any other elements.

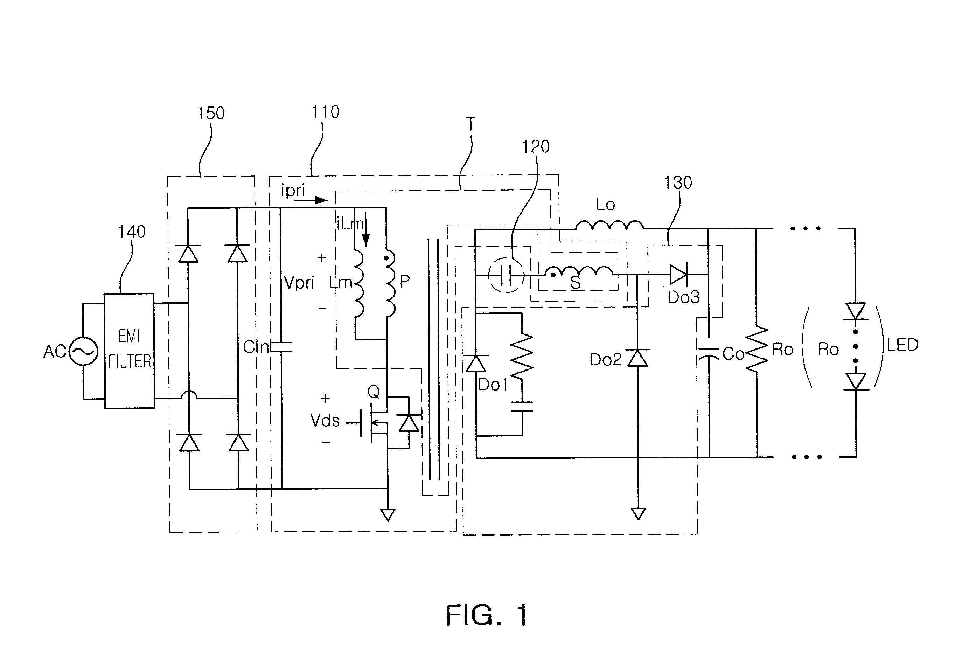

FIG. 1 is a schematic circuit diagram of a power supply apparatus according to an embodiment of the invention.

Referring to FIG. 1, a power supply apparatus 100 according to an embodiment of the invention may include a power converting unit 110, a balancing unit 120, and a path providing unit 130. In addition, the power supply apparatus 100 may further include an electromagnetic interference (EMI) filter 140 and a rectifying unit 150.

The power converting unit 110 may include a transformer T having a primary winding p and a secondary winding S and a power switch Q switching power input to the primary winding p. The primary winding P and the secondary winding S may be magnetically coupled to each other according to a preset turn ratio. The power input to the primary winding p may induce power to the secondary winding s according to the switching of the power switch Q, and a voltage level of the power induced to the secondary winding s may be determined according to the preset turn ratio.

In addition, the power converting unit 110 may perform a power conversion operation in a forward scheme and a flyback scheme and may selectively operate the forward scheme according to the sum of a voltage level of input power and a voltage level of power charged in the balancing unit 120.

Output power of the power converting unit 110 may be transferred to a load Ro, particularly, at least one light emitting diode (LED) to thereby allow the LED to emit light. A plurality of LEDs may be connected to each other in series to form a single LED array. Alternatively, although not shown, a plurality of LED arrays may be connected to each other in parallel and receive the output power to perform a light emitting operation.

The balancing unit 120 may maintain a balance between a power level by the forward scheme of the power converting unit 110 and a power level by the flyback scheme thereof, and may be configured as a capacitor electrically connected between an output inductor Lo and the secondary winding S and performing power charging and discharging operations.

The path providing unit 130 may clamp the power by the forward scheme of the power converting unit 110 and the power by the flyback scheme thereof to provide a power transfer path, and may include a first diode Do1 connected between a ground, one end of the capacitor of the balancing unit 120 and one end of the output inductor Lo to provide a power transfer path, a second diode Do2 connected between the ground and one end of the secondary winding S to provide a power transfer path and clamp the power, and a third diode Do3 connected between one end of the secondary winding S, the other end of the output inductor Lo and an output capacitor Co to provide a power transfer path and clamp the power.

In addition, the EMI filter 140 may filter electromagnetic interference (EMI) from input AC power, and the rectifying unit 150 may rectify the filtered power and transfer the rectified power to the primary winding P of the transformer T.

The power converting unit 110 may selectively perform the power conversion operation in the forward scheme according to the sum of the voltage level of the input power and the voltage level of the power charged in the capacitor of the balancing unit 120. More specifically, the power converting unit 110 may perform the power conversion operation in the forward scheme in the case in which the sum of the voltage level of the input power and the voltage level of the power charged in the capacitor of the balancing unit 120 is higher than a voltage level of output power. Meanwhile, the power converting unit 110 may perform the power conversion operation in the flyback scheme normally, regardless of the voltage level of the input power.

In addition, the power converting unit 110 may include the power switch Q, and the power switch Q may constantly maintain a turn-on duty to thereby improve a power factor of the input power.

That is, the power converting unit 110 may perform power factor improvement and power conversion operations in a single power conversion circuit.

Hereinafter, a power conversion operation of the power converting unit 110 according to comparison between voltage levels of input power and power induced to the primary winding of the transformer T will be described in detail.

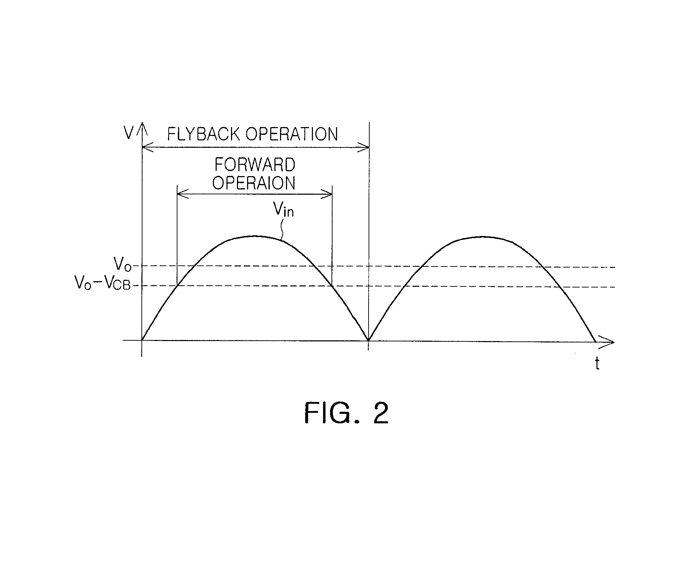

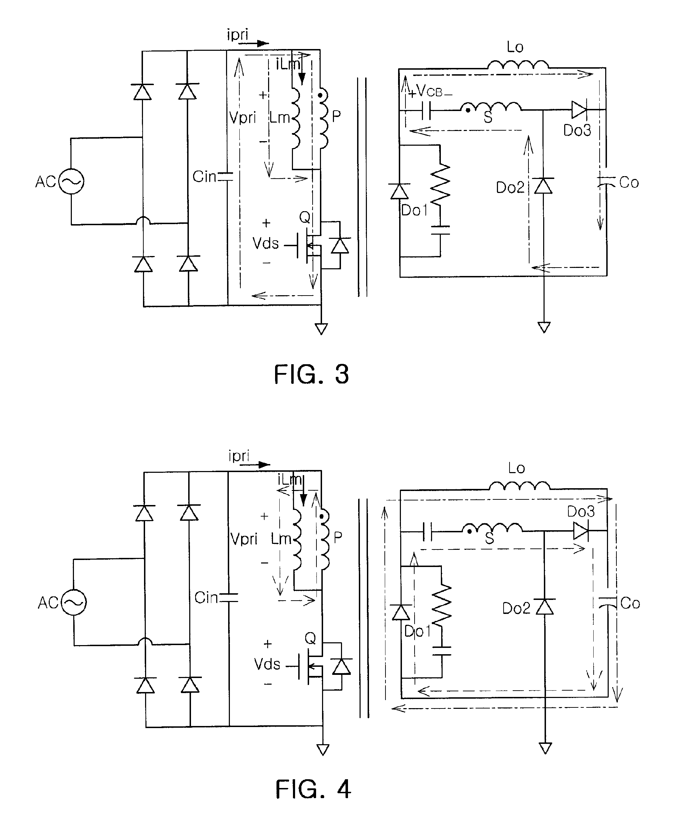

FIG. 2 is a graph showing power conversion operation criteria of the power supply apparatus according to the embodiment of the invention. FIGS. 3 and 4 are circuit diagrams showing current flows according to operating modes of the power supply apparatus according to the embodiment of the invention.

As described above, the power converting unit 110 may selectively perform the power conversion operation in the forward scheme according to a comparison result between the sum of the voltage level of the input power and the voltage level of the power charged in the capacitor of the balancing unit 120 and the voltage level of the output power. More specifically, in the case in which the sum of the voltage level of the input power and the voltage level of the power charged in the capacitor of the balancing unit 120 is higher than the voltage level of the output power, the power converting unit 110 may perform the power conversion operation in the forward scheme, whereas in the case in which the sum of the voltage level of the input power and the voltage level of the power charged in the capacitor of the balancing unit 120 is lower than the voltage level of the output power, the power converting unit 110 may stop the power conversion operation in the forward scheme. Since the power conversion operation is selectively performed in the forward scheme according to the comparison result between the sum of the voltage level of the input power and the voltage level of the power charged in the capacitor of the balancing unit 120 and the voltage level of the output power, rather than according to the voltage level of the input power, a voltage range of the input power to which power conversion in the forward scheme is applied is increased to thereby improve power conversion efficiency.

In the case in which the sum of the voltage level of the input power and the voltage level of the power charged in the capacitor of the balancing unit 120 is higher than the voltage level of the output power, the power converting unit 110 may perform the power conversion operation in the forward scheme and the flyback scheme. Referring to FIG. 3, when the power switch Q is turned on, a current path may be formed in a direction of an arrow as shown in FIG. 3, such that the power may be transferred to the secondary side in the forward scheme. In this case, magnetic energy may be stored in a magnetizing inductor Lm on the primary side during a period in which the power switch is turned on. The capacitor of the balancing unit 120 may be disposed on the secondary side, and the capacitor may serve to balance the power transferred in the forward scheme during the period in which the power switch Q is turned on and the power transferred in the flyback scheme to increase the voltage level of the input power at which the forward scheme may be operated, thereby enabling high efficiency power transmission. When it is assumed that a voltage applied to the capacitor is V_{CB}, voltage stress applied to the first diode Do1 is Ns/Np*Vin+ V_{CB} (here, Np and Ns refer to the number of turns of the primary winding and the number of turns of the secondary winding, respectively, and Vin refers to the voltage level of the input power). In addition, voltage stress applied to the third diode Do3 is an output voltage Vo.

Next, when the power switch Q is turned off, the power may be transferred in the forward scheme (an alternate long and short dashed line) and the flyback scheme (a broken line) as shown in FIG. 4. As shown in FIG. 4, energy stored in the output inductor Lo may be transferred as the power through the power transfer path formed in the forward scheme, and the energy stored in the magnetizing inductor Lm may be transferred as the power through the power transfer path formed in the flyback scheme. In this case, voltage stress of the power switch Q is Vin + Np/Ns*(Vo+V_{CB}), and voltage stress of the second diode Do2 is the output voltage Vo.

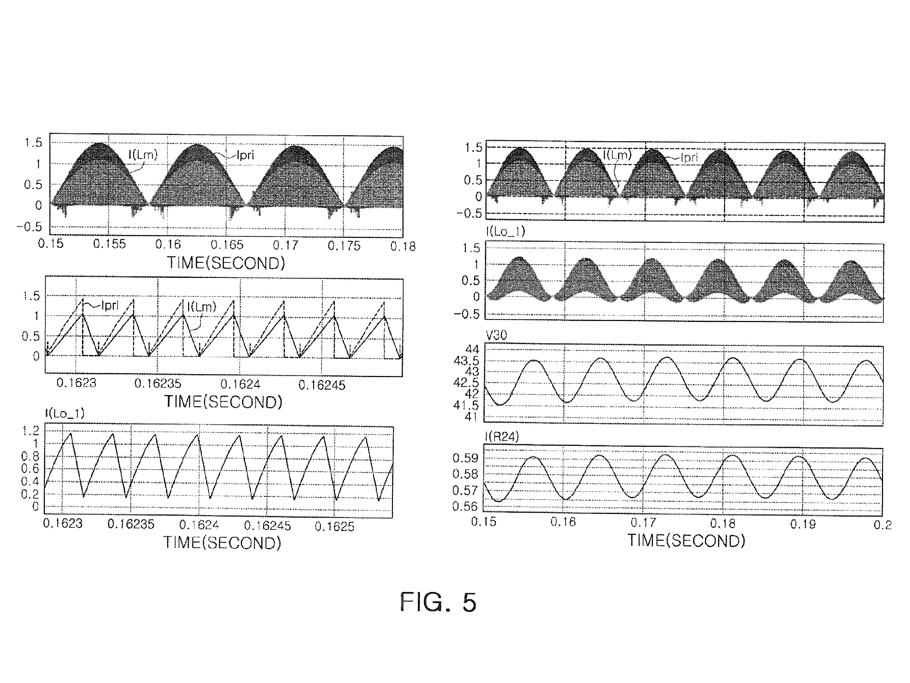

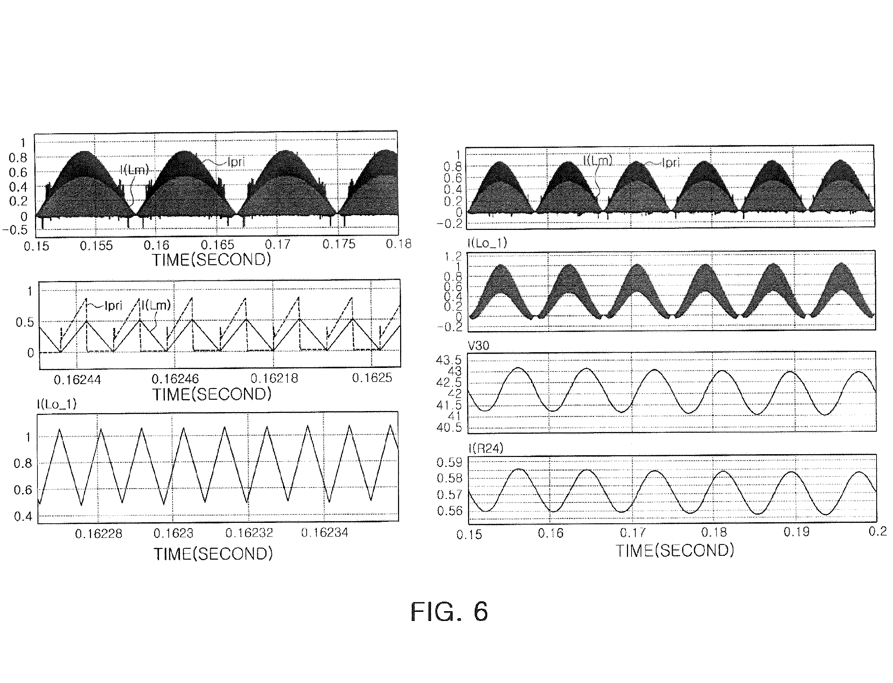

FIGS. 5 and 6 are graphs showing electrical characteristics according to the operating modes of the power supply apparatus according to the embodiment of the invention.

Referring to FIGS. 5 and 6, it can be seen that in the case of the power supply apparatus according to the embodiment of the invention, even when the voltage level of the input power is varied from 100V (FIG. 5) to 200V (FIG. 6), the output power is controlled to be 42V and 570mA and a boundary conduction mode (BCM) operation is performed. In addition, it can be seen that even when a turn ratio of the transformer is 3:1, a current flows in the output inductor Lo of the secondary side even at a low input voltage by the capacitor of the balancing unit 120 on the secondary side and a magnetizing current iLm of the magnetizing inductor Lm is lower than a current ipri of the primary side. Therefore, the power supply apparatus according to the embodiment of the invention may allow for a high efficiency operation through improvement of core loss even at a low input voltage.

As set forth above, according to the embodiment of the invention, the power factor correction function and the constant current control function are performed in a single stage circuit, such that the power conversion efficiency is increased and a dead zone of the input power is removed, whereby the power factor may be increased.

That is, an existing flyback converter for power factor improvement has a relatively simple circuit configuration as compared with an LED driving circuit including a power factor correction circuit and a DC to DC converter and achieves slightly high efficiency (maximum efficiency of about 88%). That is, it tends to show that power consumption of a snubber, power consumption of a transformer core, and power consumption of a primary side power switch are slightly high. In order to significantly increase power efficiency by improving these matters, according to the embodiment of the invention, the current of the magnetizing inductor of the transformer is reset to the output side, such that powering may be achieved in the entire section Ts in a single period. A root mean square (RMS) of the current of the primary side is decreased, such that conduction loss may be decreased. In addition, current offset of the magnetizing inductor is small, such that transformer core loss is decreased, whereby high efficiency may be accomplished.

In an existing forward converter, in the case in which the input voltage is lower than the output voltage, powering to the output side is not achieved, and a dead zone of the input current is generated, such that it may be difficult to expect a high power factor improvement effect. However, in the embodiment of the invention, the power converting unit 110 is operated as the flyback converter in the case in which the sum of the voltage level of the input power and the voltage level of the power charged in the capacitor of the balancing unit 120 is lower than the voltage level of the output power, and is operated as the forward converter and the flyback converter in the case in which the sum of the voltage level of the input power and the voltage level of the power charged in the capacitor of the balancing unit 120 is higher than the voltage level of the output power. Therefore, the power factor may be increased without the dead zone of the input current, and the core loss is decreased as compared to the flyback converter according to the related art, whereby high efficiency characteristics may be achieved.

As set forth above, according to the embodiments of the invention, power factor correction and constant current control functions are performed in a single stage circuit, such that power conversion efficiency is increased and a dead zone of input power is removed, whereby the power factor may be increased. Particularly, a voltage range of the input power to which power conversion in a forward scheme is applied is increased, whereby power conversion efficiency may be further improved.

While the present invention has been shown and described in connection with the embodiments, it will be apparent to those skilled in the art that modifications and variations can be made without departing from the spirit and scope of the invention as defined by the appended claims.

## Claims

1. A single stage forward-flyback converter comprising:
a power converting unit including a transformer having a primary winding receiving input power and a secondary winding magnetically coupled to the primary winding to receive power induced thereto and converting the input power in a forward scheme and a flyback scheme;
a balancing unit maintaining a balance between a power level by the forward scheme of the power converting unit and a power level by the flyback scheme thereof; and
a path providing unit clamping the power by the forward scheme of the power converting unit and the power by the flyback scheme thereof to provide a power transfer path,
wherein the power converting unit selectively operates the forward scheme according to a voltage level of the input power.

2. The single stage forward-flyback converter of claim 1, wherein the power converting unit operates the forward scheme when the sum of the voltage level of the input power and a voltage level of power charged in the balancing unit is higher than a voltage level of output power.

3. The single stage forward-flyback converter of claim 1, wherein the power converting unit normally operates the flyback scheme, regardless of the voltage level of the input power.

4. The single stage forward-flyback converter of claim 1, wherein the power converting unit further includes a power switch switching the power input to the primary winding of the transformer;
wherein the power switch constantly maintains a turn-on duty to improve a power factor of the input power.

5. The single stage forward-flyback converter of claim 1, wherein the input power is rectified and then transferred to the primary winding.

6. The single stage forward-flyback converter of claim 1, wherein the balancing unit is configured as a capacitor provided between the secondary winding and an output inductor and having power charged therein or discharged therefrom.

7. The single stage forward-flyback converter of claim 1, wherein the path providing unit includes:
a first diode connected between a ground, one end of the balancing unit and one end of an output inductor to provide a power transfer path;
a second diode connected between the ground and one end of the secondary winding to provide a power transfer path and clamp the power; and
a third diode connected between one end of the secondary winding, the other end of the output inductor and an output capacitor to provide a power transfer path and clamp the power.

8. The single stage forward-flyback converter of claim 1, wherein an output of the power converting unit is supplied to at least one light emitting diode.

9. A power supply apparatus comprising:
a rectifying unit rectifying alternating current (AC) power;
a power converting unit including a transformer having a primary winding receiving the rectified power from the rectifying unit and a secondary winding magnetically coupled to the primary winding to receive power induced thereto, and converting the rectified power in a forward scheme and a flyback scheme;
a balancing unit maintaining a balance between a power level by the forward scheme of the power converting unit and a power level by the flyback scheme thereof; and
a path providing unit clamping the power by the forward scheme of the power converting unit and the power by the flyback scheme thereof to provide a power transfer path,
wherein the power converting unit selectively operates the forward scheme according to a voltage level of the rectified power.

10. The power supply apparatus of claim 9, wherein the power converting unit operates the forward scheme when the sum of the voltage level of the rectified power and a voltage level of power charged in the balancing unit is higher than a voltage level of output power.

11. The power supply apparatus of claim 9, wherein the power converting unit normally operates the flyback scheme, regardless of the voltage level of the rectified power.

12. The power supply apparatus of claim 9, wherein the power converting unit further includes a power switch switching the power input to the primary winding of the transformer;
wherein the power switch constantly maintains a turn-on duty to improve a power factor of the rectified power.

13. The power supply apparatus of claim 9, wherein the balancing unit is configured as a capacitor provided between the secondary winding and an output inductor and having power charged therein or discharged therefrom.

14. The power supply apparatus of claim 9, wherein the path providing unit includes:
a first diode connected between a ground, one end of the balancing unit, and one end of an output inductor to provide a power transfer path;
a second diode connected between the ground and one end of the secondary winding to provide a power transfer path and clamp the power; and
a third diode connected between one end of the secondary winding, the other end of the output inductor and an output capacitor to provide a power transfer path and clamp the power.

15. The power supply apparatus of claim 9, further comprising an electromagnetic interference (EMI) filter removing EMI from the AC power.
